# FASCICULE DE BREVET EUROPEEN

(11) **EP 1 750 107 B1**
(45) Date de publication et mention de la délivrance du brevet: **04.05.2011**
(21) Numéro de dépôt: 06300756.1
(22) Date de dépôt: 05.07.2006
(51) Int. Cl.: G01J 5/20, H01L 31/09

(54) **Détecteur thermique de rayonnements électromagnétiques à éléments d'isolation orientés et dispositif de détection mettant en oeuvre de tels détecteurs**
Wärmedetektor für elektromagnetische Strahlung mit ausgerichteten Isolationselementen und Erfassungsvorrichtung zur Ingangsetzung solcher Detektoren
Thermal electromagnetic radiation detector using directed insulating components and detection device implementing said detectors

(30) Priorité: 04.08.2005 FR 0552437
(43) Date de publication de la demande: 07.02.2007
(73) Titulaire: Commissariat à l'Énergie Atomique et aux Énergies Alternatives, 75015 Paris (FR)
(72) Inventeur: Ouvrier-Buffet, Jean-Louis, 74320 Sevrier (FR)
(74) Mandataire: Vuillermoz, Bruno

(56) Documents cités:
- EP-A- 0 773 435
- EP-A- 0 892 257
- US-A- 5 672 903
- US-B1- 6 201 243
- US-B1- 6 320 189

## Description

### DOMAINE TECHNIQUE

La présente invention concerne un détecteur thermique, notamment bolométrique, ainsi qu'un dispositif de détection mettant en oeuvre de tels détecteurs.

L'invention trouve notamment son domaine d'application dans l'imagerie infrarouge.

### ETAT ANTERIEUR DE LA TECHNIQUE

Par définition, un détecteur thermique permet de mesurer la quantité d'un flux énergétique incident, et par exemple, la puissance d'un rayonnement électromagnétique dans le domaine de l'infrarouge.

Concernant les détecteurs infrarouges, il est connu des dispositifs agencés sous forme matricielle, susceptibles de fonctionner à la température ambiante, c'est à dire ne nécessitant pas de refroidissement, contrairement aux dispositifs de détection appelés détecteurs « quantiques », qui eux nécessitent un fonctionnement à très basse température, typiquement celle de l'azote liquide.

Ces détecteurs comportent généralement un élément sensible pouvant être chauffé par un rayonnement infrarouge, caractéristique de la température et de l'émissivité des corps observés. L'augmentation de température de l'élément sensible engendre une variation d'une propriété électrique du matériau sensible : apparition de charges électriques par effet pyroélectrique, variation de capacité par changement de la constante électrique ou, plus traditionnellement, variation de la résistance d'un matériau semi-conducteur ou métallique.

Dans ce dernier cas de figure, on parle de détecteur bolométrique de type résistif. Le rayonnement incident absorbé provoque une augmentation de la température du détecteur, qui induit une variation de la résistance électrique. Ces variations de résistance engendrent des variations de tension ou de courant aux bornes du détecteur, qui constituent le signal délivré par le capteur.

Un tel détecteur non refroidi associe généralement :
- des moyens d'absorption du rayonnement infrarouge et de conversion de ce dernier en chaleur ;
- des moyens d'isolation thermique du détecteur, pour à permettre à celui-ci de s'échauffer sous la seule action du rayonnement infrarouge ;
- des moyens de thermométrie qui, traditionnellement, mettent en oeuvre un élément résistif ;
- des moyens de lecture des signaux électriques fournis par les moyens de thermométrie.

Les détecteurs destinés à l'imagerie infrarouge sont réalisés sous la forme d'une matrice de détecteurs élémentaires selon une ou deux dimensions, sur un substrat, généralement réalisé en silicium. Ce substrat comporte des moyens d'excitation électrique (stimuli) desdits détecteurs élémentaires, et des moyens de pré-traitement des signaux électriques générés par les détecteurs élémentaires.

Ces moyens d'excitation électrique et de pré-traitement sont formés sur le substrat et constituent un circuit de lecture.

En pratique, des imageurs infrarouges monolithiques fonctionnant à température ambiante sont fabriqués en connectant directement une matrice d'éléments sensibles à un circuit de multiplexage en silicium de type CMOS ou CCD.

Un dispositif comportant une matrice de détecteurs élémentaires et un circuit de lecture associé est généralement placé dans un boîtier et relié, notamment électriquement, au milieu extérieur par des techniques classiques (fils métalliques et broches de montage). Dans un tel boîtier, la pression est réduite afin de limiter les pertes thermiques. Ainsi, le détecteur thermique peut être encapsulé sous vide ou sous un gaz peu conducteur de la chaleur pour gagner en performance. Le boîtier est en outre muni d'une fenêtre transparente aux rayonnements à détecter.

Pour observer une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture (également prévu à cet effet), à chacun des détecteurs élémentaires, ou à chaque rangée de tels détecteurs, afin d'obtenir un signal électrique constituant l'image de la température atteinte par chaque détecteur élémentaire.

Ce signal est traité de manière plus ou moins élaborée par le circuit de lecture, puis éventuellement par un dispositif électronique extérieur au boîtier, afin de générer une image thermique de la scène observée.

Les performances des détecteurs bolométriques non refroidis dépendent beaucoup de la maîtrise d'élaboration et d'intégration des matériaux bolométriques les plus performants au sein de structures très légères constituées par des micro - ponts bolométriques isolés thermiquement du circuit de lecture, afin d'en tirer le meilleur parti en terme de rapport signal/bruit.

Un fonctionnement performant de ces détecteurs implique, en particulier au niveau du matériau sensible, une faible masse calorifique, une bonne isolation thermique de la couche active vis-à-vis de son support, ainsi qu'une forte sensibilité dudit matériau quant à l'effet de conversion de l'échauffement en signal électrique. Les deux premières conditions sont satisfaites par une mise en oeuvre en couche mince.

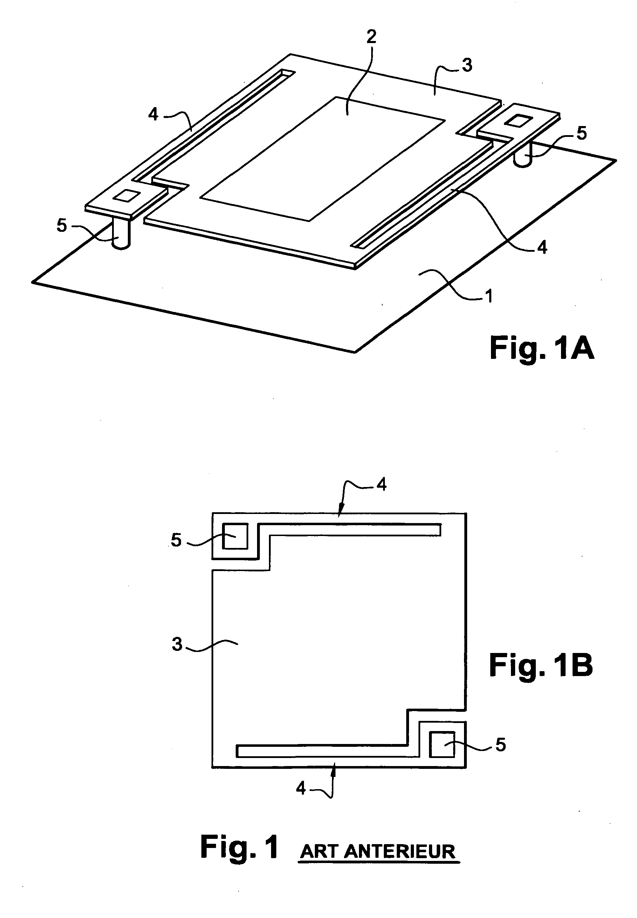

L'art antérieur décrit diverses manières de disposer les divers éléments constitutifs des détecteurs élémentaires. Cependant, un agencement classique est représenté sur la figure 1, en rapport avec un bolomètre.

Schématiquement, ce type de détecteur est constitué d'une fine membrane **3** absorbant le rayonnement incident (absorbeur), suspendue au-dessus du substrat **1** faisant fonction de support, et fixée à ce substrat par l'intermédiaire de points d'ancrage **11** appelés « piliers ». Sous l'effet du rayonnement, cette membrane **3** s'échauffe et transmet sa température à une couche généralement mince **2** qui est déposée sur la membrane et qui joue le rôle de thermomètre.

Par absorbeur, on désigne une ou plusieurs couches ou arrangements de couches, dont la fonction est de capter le rayonnement électromagnétique, de le convertir en chaleur et de transmettre sa température à la couche mince **2** qui joue le rôle de thermomètre.

Selon l'état de l'art, différents thermomètres **2** sont envisagés, parmi lesquels le thermistor est une option largement répandue. En particulier, de nombreux documents et publications décrivent différentes structures bolométriques de type résistif à partir d'un matériau semi-conducteur.

Le matériau sensible peut ainsi être réalisé en silicium polycristallin ou amorphe, de type p ou n, faiblement ou fortement résistif. Il peut également être réalisé en un oxyde de vanadium (VOₓ) élaboré dans une phase semi-conductrice.

Généralement, le matériau sensible repose sur un support isolant (SiO₂, SiO, SiN, ...) qui assure la rigidité mécanique de la structure bolométrique. Il peut aussi être totalement encapsulé avec l'un de ces matériaux isolants.

Le substrat - support **1** est typiquement constitué d'un circuit électronique intégré sur une plaquette de silicium, comprenant d'une part, des dispositifs de stimuli et de lecture du thermomètre, et d'autre part, les composants de multiplexage qui permettent de sérialiser les signaux issus des différents thermomètres et de les transmettre vers un nombre réduit de sorties afin d'être exploités par un système d'imagerie usuel. Ce circuit peut être positionné sous le détecteur, ou au contraire, être déporté plus loin sur le substrat. Ce circuit peut aussi se résumer à un réseau d'interconnexion, qui a pour fonction de relier les sorties électriques du détecteur à un circuit de traitement des informations, situé ailleurs.

L'interconnexion électrique entre le thermomètre **2** et les éléments de lecture disposés sur le substrat **1** est assurée par une couche, généralement métallique, présente dans les dispositifs d'isolation thermique décrits ci-dessous.

La sensibilité du détecteur thermique est notoirement améliorée en introduisant des « bras » d'isolement **4** entre le substrat support **1** et la membrane **3,** destinés à limiter les pertes thermiques de cette dernière et donc à préserver son échauffement. De fait, ces bras sont généralement conducteurs électriquement mais résistants thermiquement.

Dans ce type de dispositif, le circuit de lecture applique donc via les piliers **5** et les bras **4,** et via au moins deux parties conductrices ou électrodes (non représentées), un courant électrique qui traverse la structure parallèlement au plan du détecteur bolométrique. Ce courant circule alors à travers le matériau bolométrique **2,** dont la résistivité varie avec la température.

Les bras d'isolement **4** assurant l'isolation thermique de la membrane bolométrique consistent typiquement en des structures planes, allongées et très étroites, constituées de couches les plus minces possible.

Selon leurs modes de réalisation, ces dispositifs d'isolation sont situés dans le même plan que la planche bolométrique, ou bien sont réalisés en dessous de celle-ci.

Réalisé dans le plan de la planche bolométrique, ce système de bras est pénalisant au niveau du facteur de remplissage du point élémentaire. L'expérience démontre qu'il n'est pas possible d'accroître de manière importante la longueur de ces bras, ni de réduire leur largeur et/ou leur épaisseur sans affecter la rigidité de la structure. En effet, ces éléments constituent un point de faiblesse mécanique affectant la stabilité des micro - ponts qui peuvent alors basculer ou se déformer, et donc entrer en contact avec le substrat, limitant ainsi l'isolation thermique, et corollairement réduisant de manière importante les performances du détecteur.

Par ailleurs, l'une des couches qui constituent ces dispositifs d'isolation thermique, est généralement une couche conductrice de l'électricité, ayant pour fonction d'assurer la connexion électrique entre le détecteur et le circuit de lecture. Il en résulte qu'une réduction de la largeur et/ou de l'épaisseur de ces éléments conduit à un accroissement de la résistance électrique d'accès du détecteur, qui, si elle est trop élevée, nuit à une polarisation optimale du détecteur.

En outre, les matériaux utilisés pour réaliser cette couche électriquement conductrice sont, en général, également de bons conducteurs thermiques. La présence de cette couche dans les dispositifs d'isolation thermique conduit donc à une dégradation significative de leur isolation thermique, et corollairement des performances du détecteur.

Le document US-B1-6 201 243 décrit des piliers à tronc conique comportant des couches diélectriques autour des couches conductrices électriquement, permettant de maintenir la planche bolométrique au-dessus du substrat.

Le document US-B-6 320 189 décrit un détecteur bolométrique dans lequel la planche est maintenue parallèle au-dessus du substrat via des moyens de connexion parallèles et perpendiculaires.

Le document EP-A-0 773 435 décrit une planche bolométrique ayant des extensions permettant l'isolation thermique, situées majoritairement dans le même plan que celle-ci mais dans les extrémités courbées rejoignant le substrat.

Le document US 5 672 903 décrit un détecteur bolométrique comprenant des piliers et des fils connecteurs ayant la fonction de soutenir la planche bolométrique.

Le document EP-A-892 257 décrit un capteur infrarouge dont l'élément sensible est connecté au substrat par des structures de support.

Une grande partie des améliorations technologiques potentielles des bolomètres est en fait bornée par la valeur maximale de la constante de temps thermique, admissible pour l'application considérée. En effet, celle-ci comporte deux des trois paramètres fondamentaux impactant la performance des détecteurs :
- la résistance thermique liée au design et à l'épaisseur des couches constituant les bras d'isolation thermique ;
- la capacité calorifique directement liée au volume du matériau sensible et intervenant directement dans le rapport signal/bruit.

D'un point de vue théorique, lorsque la constante de temps thermique est imposée, il paraît plus pertinent d'accroître la résistance thermique plutôt que la masse du détecteur pour élever la performance. Cette approche demeure valable tant que la stabilité des micro - ponts n'est pas remise en cause.

Au vu des différentes contraintes exposées ci-dessus, le problème technique que se propose de résoudre la présente invention est donc d'offrir une configuration alternative des détecteurs thermiques ou bolomètres, en particulier au niveau des bras d'isolation, permettant d'améliorer les propriétés d'isolation thermique du dispositif.

### EXPOSE DE L'INVENTION

Selon l'invention, le détecteur thermique comprend les caractéristiques mentionnées dans la revendication 1.

De fait, la solution proposée par l'invention résulte de l'observation que lorsque l'on tente de réduire l'épaisseur et/ ou d'accroître la longueur des bras d'isolation thermique pour augmenter leurs performances, ceux-ci se déforment et sont alors situés dans un plan non parallèle à celui du substrat et/ou de la planche bolométrique.

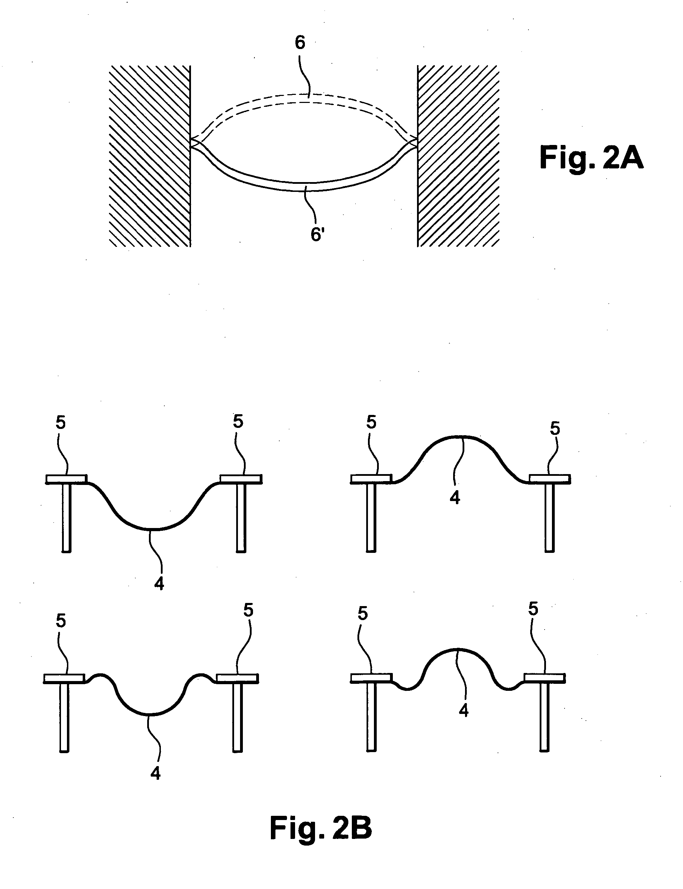

Le principe physique de cette déformation est illustré à la figure 2A sur des poutres. La forme du flambement est déterminée par le type de fixation de la barre à ses extrémités. Dans le cas d'un encastrement parfait sans dissymétrie d'une poutre sans contrainte résiduelle, le flambage se produit hors du plan de manière équiprobable dans les deux directions **6, 6'.**

La figure **2B** illustre la transposition de ce principe à une structure de bras **4** située entre deux clous **5** d'une structure bolométrique. Les clous **5** étant indéformables, les bras **4** se déforment par exemple selon les configurations représentées en fonction de l'amplitude et du signe des contraintes résiduelles dans les couches constituant le bras et résultant de l'interface clou **5**/bras **4.**

Dans le cadre d'un détecteur thermique d'un rayonnement électromagnétique, il faut évidemment éviter la rupture des éléments d'isolation thermique, et de manière générale tout contact entre la structure et le substrat, ce qui ruinerait l'isolation thermique. Selon l'invention, il est possible de contrôler et d'orienter les déformations des éléments d'isolation thermique, de manière à améliorer les performances thermiques du dispositif revendiqué.

Sont plus particulièrement concernés par l'invention les détecteurs thermiques de type bolomètre, dont le matériau sensible présente une résistivité qui varie avec la température. De tels matériaux bolométriques sont préférentiellement des matériaux semi-conducteurs choisis dans le groupe suivant : le silicium polycristallin ou amorphe de type p ou n, le germanium polycristallin ou amorphe de type p ou n, leurs alliages, les oxydes de vanadium et les ferrites.

Certains éléments d'isolation thermique selon l'invention peuvent en outre être conducteurs de l'électricité et donc, à ce titre, appartenir aux éléments assurant la transmission électrique entre le matériau sensible et le substrat. Ils sont alors constitués d'une couche métallique seule, ou d'une combinaison d'empilements isolants/métaux.

Classiquement, le matériau sensible s'étend sensiblement parallèlement au substrat en raison de la présence d'au moins un moyen de fixation perpendiculaire au plan du substrat, préférentiellement deux. Selon l'invention, les éléments d'isolation thermique sont reliés au substrat via ces moyens de fixation.

Selon l'invention, ces moyens de fixation sont constitués de clous métalliques, permettant de prolonger la continuité électrique entre la planche de détection et le substrat.

C'est l'orientation de la tête des ces clous qui impose l'orientation des éléments d'isolation thermique hors de tout plan sensiblement parallèle à celui dans lequel s'inscrit le substrat et/ou la planche de détection.

Egalement, la planche de détection peut présenter des éléments de liaison avec les éléments d'isolation thermique, lesdits éléments de liaison étant aptes à orienter les éléments d'isolation thermique hors du plan dans lequel s'inscrit la planche de détection.

Selon cet aspect, on impose une forme appropriée à la tête du clou afin d'assurer la stabilité des planches de détection lorsque la longueur des bras dépasse la distance interclous. De manière connue pour l'homme du métier, la forme des clous est adaptée aux gradients de contraintes résiduelles présentes dans les couches constituant les bras.

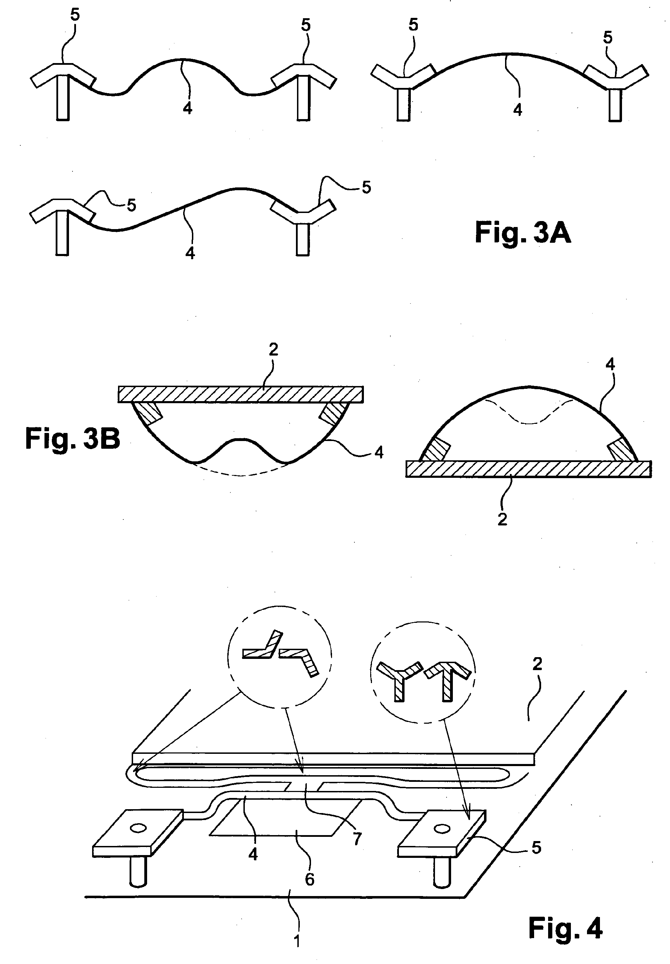

Deux types de tête de clou adaptés pour la mise en oeuvre de l'invention sont illustrés à la figure 3A. Les clous **5** étant indéformables, les bras **4** se déforment comme illustré en fonction de l'amplitude et du signe des contraintes résiduelles dans les couches constituant le bras, de la distance entre les clous et de l'interface du système clou/bras.

En pratique, on constate que dans cette configuration, la longueur du bras est supérieure à la longueur d'un bras situé dans un plan parallèle au substrat, sans qu'aucun contact avec celui-ci ne soit autorisé.

Alternativement, le principe de cette invention peut s'appliquer dans le cas où les bras ne se raccordent non plus directement au clou, mais à la planche de détection, préférentiellement une planche bolométrique. Dans cette configuration, il convient selon l'invention d'orienter convenablement les régions d'accrochage afin d'assurer la stabilité de la structure.

La figure **3B** illustre deux situations symétriques, qu'il peut être utile de concilier lorsque les bras sont asymétriques, par exemple en présence d'un matériau conducteur dans une moitié de bras. Les régions inclinées dans le prolongement de la planche bolométrique **2** sont indéformables du fait de leur épaisseur : Typiquement, l'épaisseur de la planche bolométrique **2** est dix fois supérieure à celle des bras **4.** La forme des bras résulte alors de l'amplitude et du signe des contraintes résiduelles dans les couches les constituants, de la distance entre les régions inclinées d'accrochage et de l'interface du système planche/bras.

Il apparaît qu'en matière de détection bolométrique, les bras de suspension de la membrane constituent un facteur déterminant pour la performance du détecteur. De manière très avantageuse selon l'invention, ces bras sont maintenus par une liaison rigide à chacune de leurs extrémités, à la fois dans leur liaison avec le substrat mais également avec la planche bolométrique, l'épaisseur de cette dernière étant bien supérieure à celle des bras (typiquement d'un facteur 10).

En pratique, les extrémités des bras d'isolement étant ainsi fixes, les conditions de stabilité des détecteurs sont déterminées par le comportement des matériaux constituant les bras, lors de leur fabrication. Ainsi, un bras monocouche ou multicouches présentant une déformation initiale extensive restera plat après la gravure des couches sacrificielles sur lesquelles a été construite la structure (libération des bras).

En revanche et conformément à ce qui est recherché dans la présente invention, si la déformation initiale du film est compressive, elle produit un flambement des bras hors du plan.

Conformément à un détecteur haute performance selon l'invention, illustré à la figure 4, les éléments d'isolation thermique **4** se présentent sous la forme de X, dont deux des extrémités sont reliées au substrat **1** via des moyens de fixation **5,** et dont les deux autres extrémités sont fixées directement sur la planche de détection **2,** l'orientation desdits éléments hors d'un plan sensiblement parallèle à celui dans lequel s'inscrit le substrat **1** et/ou la planche de détection **2** résultant de contraintes s'exerçant au niveau des moyens de fixation **5** et/ou de l'interface avec la planche de détection **2** et/ou de la partie centrale des éléments d'isolation thermique **7.**

Un ou plusieurs détecteurs thermiques selon l'invention sont mis en oeuvre dans un dispositif de détection, notamment infrarouge de type bolométrique, qui présente préférentiellement une architecture matricielle.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif, à l'appui des figures annexées.
La figure 1 est comme déjà dit, une illustration en perspective (Fig. 1A) ou en plan (Fig. 1B) d'un détecteur élémentaire de rayonnements électromagnétiques, fondé sur le principe de la détection thermique, selon l'art antérieur.
La figure 2A représente le flambage en flexion d'une poutre et la figure 2B représente le flambage d'une structure de bras d'isolation thermique situé entre deux clous d'un détecteur bolométrique.
La figure 3 illustre des structures de bras conformes à l'invention, avec une déformation induite au niveau de deux points de fixation à l'interface clou/bras (Fig. 3A) ou à l'interface planche de détection/bras (Fig. 3B).
La figure 4 représente une architecture générale privilégiée d'un détecteur thermique selon l'invention.
La figure 5 représente schématiquement les différentes étapes dans la fabrication d'un bolomètre selon l'invention.

### EXPOSE DETAILLE DE L'INVENTION

L'invention concerne donc tout d'abord un détecteur thermique élémentaire, mettant en oeuvre en particulier un matériau bolométrique en vue de permettre la détection d'un rayonnement électromagnétique, et plus particulièrement infrarouge.

Plus spécifiquement, elle illustre l'orientation des éléments d'isolation thermique hors de tout plan sensiblement parallèle à celui dans lequel s'inscrit le substrat et/ou la planche bolométrique.

Les figures annexées ont plus précisément trait à un bolomètre de type résistif. Il est cependant bien entendu que l'invention s'adapte à tout détecteur thermique autre qu'un matériau bolométrique, comme par exemple une jonction p/n ou n/p ou un thermo élément.

La figure 4 représente un mode de réalisation privilégié de l'invention.

Un tel bolomètre est réalisé sur un substrat **1** intégrant un circuit de lecture intégré. Avantageusement, est élaborée sur celui-ci une couche métallique **6,** qui peut servir à la fois de réflecteur du rayonnement infrarouge incident et de connexion électrique du bolomètre.

La planche de détection ou matériau sensible **2** se présente sous la forme d'une couche mince s'étendant selon un plan sensiblement parallèle au substrat, possédant une section avantageusement rectangulaire voire carrée.

Cette couche est elle-même déposée sur une fine membrane **3** ou absorbeur. Par absorbeur, on désigne une ou plusieurs couches ou arrangements de couches, dont la fonction est de capter le rayonnement électromagnétique, de le convertir en chaleur et de transmettre sa température à la couche mince **2** qui joue le rôle de thermomètre.

L'ensemble **2, 3** est maintenu suspendu au-dessus du substrat **1** faisant fonction de support, et fixé à ce substrat par l'intermédiaire de points d'ancrage **5** appelés « piliers ». Ces piliers sont des clous métalliques, conducteurs électriques. Alors que classiquement, ces clous sont au nombre de deux, situés de manière symétrique de part et d'autre de la planche bolométrique (Fig. 1), selon la figure 4, ils sont au nombre de quatre, situés aux quatre coins du substrat.

La couche de matériau sensible **2** est en contact dans sa partie inférieure avec un matériau d'isolation thermique formant des bras d'isolement **4.** Ces bras d'isolement se présentent avantageusement sous la forme d'un X, dont deux des extrémités sont reliés à la planche bolométrique **2** et les deux autres extrémités sont reliées mécaniquement au substrat **1** via deux clous **5.**

La lecture de la valeur thermométrique est assurée par couplage d'une électrode inférieure **7** avec une électrode située sur le circuit de lecture **1.**

L'enjeu principal selon l'invention est donc de pouvoir induire et contrôler l'orientation des éléments d'isolation thermique **4** hors de tout plan sensiblement parallèle à celui dans lequel s'inscrit le substrat et/ou la planche bolométrique.

Les principes physiques régissant ces déformations sont illustrés, comme déjà dit, aux figures 2 et 3.

D'un point de vue pratique, pour la réalisation de l'invention, l'homme du métier doit prendre en compte les considérations suivantes :
La restriction de l'expansion ou de la rétractation d'un film pendant sa croissance à l'interface film/substrat conduit à l'apparition de contraintes internes qui subsistent dans le film après dépôt. Tant que la structure n'est pas libérée, ces contraintes sont équilibrées par une réaction antagoniste dans le substrat (via la couche sacrificielle) dès lors que l'adhérence est suffisante. Après libération, ces couches adoptent un comportement autonome vis-à-vis du substrat, seulement tributaires de leurs états de contraintes mécaniques résiduelles et des structures d'ancrage.

### 1. Réalisation de bras / couches en compression

Les bras de suspension des bolomètres sont généralement de deux types selon qu'ils conduisent ou non l'électricité. Cependant, dans certaines configurations, ces bras peuvent être exclusivement électriques. Ils sont alors constitués d'une couche métallique extrêmement fine et d'au moins une couche isolante située au-dessus ou en dessous. La couche métallique peut également être emprisonnée entre deux couches de matériau isolant de même nature ou de nature différente. Les bras ne conduisant pas l'électricité sont composés au moins d'une couche isolante. L'élaboration de couche en compression est gouvernée par différents phénomènes physiques qui sont utilisés à discrétion selon les matériaux en présence :
1-1. Les contraintes extrinsèques d'origine thermique. Elles surviennent lorsque le dépôt ou la croissance est effectuée à une température différente de la température ambiante ; une contrainte thermomécanique apparaît dans le film en raison de la différence des coefficients de dilatation. En jouant sur les températures de dépôt des différents matériaux constituant les bras, il est possible de réaliser des structures en compression qu'il convient d'orienter convenablement afin de maîtriser la stabilité des micro - ponts.
1-2. La composition des films. La présence volontaire (dopage) ou involontaire (contamination) d'impuretés dans les films influe sur l'état de contraintes résiduelles. Ainsi, le dopage conduit à une modification de l'état de contrainte résiduelle qui dépend de la taille de l'atome dopant et des conditions d'élaboration et de dopage (*in situ*, implantation, diffusion). Les contaminations les plus courantes sont l'hydrogène, le carbone, le fluor et le chlore dans les dépôts chimiques en phase vapeur, l'argon dans les dépôts par pulvérisation, l'oxygène et l'hydrogène dans les procédés sous vide en général.
1-3. La structure et la texture des films. Tout changement de structure (amorphisation, cristallisation, changement de phase, apparition d'une nouvelle phase par réaction interfaciale entre films), de texture, de masse volumique, entraîne une variation de la contrainte résiduelle très supérieure à celle liée aux constantes élastiques.
1-4. Le bombardement du film par des particules énergétiques pendant ou après la croissance (ions, atomes neutres). Ce bombardement provoque un tassement (une densification) des couches atomiques supérieures conduisant ainsi à l'établissement d'une contrainte compressive dans les films déposés, par exemple par pulvérisation cathodique basse pression. La pulvérisation permet un contrôle de la contrainte qui devient extensive au-delà d'une certaine pression. Cette transition d'un état compressif à un état extensif correspond généralement à un progressif de la microstructure du matériau (passage d'une structure de nanograins à une structure colonnaire).
1-5. Les traitements thermiques. Un traitement thermique, à une température judicieusement choisie selon la nature des matériaux en présence dans les bras d'isolation thermique, peut permettre de relaxer les contraintes résiduelles dans certaines ou dans la totalité des couches de l'empilement. De cette manière, l'empilement peut être en compression avant libération.

### 2. Réalisation des structures d'orientation des bras / du flambage

La stabilité des micro - ponts nécessite d'orienter le flambage des structures d'isolation thermique afin d'exclure tout contact fortuit du matériau sensible constitutif du bolomètre avec le substrat. Bien évidemment, les techniques de l'invention s'appliquent également aux structures complexes, par exemple lorsque les bras d'isolation thermique sont situés sous le thermomètre et/ou la structure d'absorption du rayonnement (bolomètre double niveau). A cet effet, différentes techniques peuvent être utilisées :
2-1. Utilisation de matériau présentant un gradient de contraintes résiduelles perpendiculaire à la surface du film.
   Les gradients de contraintes sont liés aux variations de structure et de composition pendant la croissance et sont particulièrement élevés dans les films polycristallins. Les variations de structure peuvent être induites par les variations expérimentales pendant la croissance, notamment de la température, ou être inhérentes au processus de la croissance. Par exemple pour des films évaporés, la croissance se déroule en trois étapes :
   - formation d'îlots,
   - coalescence des îlots,
   - croissance d'un film continu.
      La mesure de la contrainte lors du dépôt montre une transition d'un état compressif à un état extensif lors des deux premières étapes. Ensuite, la contrainte évolue différemment selon la température de fusion du matériau évaporé et/ou la température de dépôt. En effet, ces deux paramètres affectent la mobilité des atomes déposés. Ainsi, lorsque les atomes ont une forte mobilité, les couches sont généralement en compression car les atomes peuvent migrer vers les joints de grains. Dans le cas contraire, les couches sont en extension. Pour les films polycristallins déposés par pulvérisation cathodique, la texture dépend également de la perte d'énergie des particules issues de la cible.
      Finalement, ces considérations montrent qu'il est possible de réaliser un gradient de contrainte dans le ou les films constituant les bras d'isolation thermique. Toutefois, la maîtrise de couches globalement en compression et présentant également un gradient de contrainte favorable reste délicate. A ce titre, les modes de réalisation suivants sont préférés.
2-2. Formation localisée d'alliage / cristallisation / réaction interfaciale au niveau de l'encrage
   Au bord des motifs gravés (bord du clou ou région de raccordement entre les bras d'isolation et le thermomètre), la présence d'une surface libre fait nécessairement décroître une composante du tenseur des contraintes. Il en résulte une concentration des contraintes (en théorie très élevée) dans la tête du clou ou/et dans la planche thermométrique. Ces effets de bord sont également déterminants dans la forme des bras d'isolation thermique après libération. En pratique, les concentrations de contraintes tendent à se relaxer par plastification ou amorces de rupture localisées. Une manière avantageuse de maîtriser les contraintes dans ces régions consiste à choisir des matériaux susceptibles de diffuser l'un dans l'autre, de façon à modifier localement la contrainte résiduelle : selon que le matériau de la tête du clou diffuse dans les couches du bras ou inversement, la contrainte locale peut être compressive ou expansive.

Il apparaît donc que la structuration des points d'ancrage est un élément essentiel de l'invention. Combinée aux techniques précédemment exposées, elle permet d'orienter géométriquement les bras d'isolation thermique. Le moyen le plus simple consiste à réaliser une empreinte dans la couche sacrificielle, préalablement à la réalisation du clou et/ou de la planche bolométrique.

Il est à remarquer qu'il peut être avantageux de mettre en oeuvre sur un même dispositif des orientations différentes tant entre les clous qu'entre les points d'attache ou de liaison sur la membrane (planche de détection).

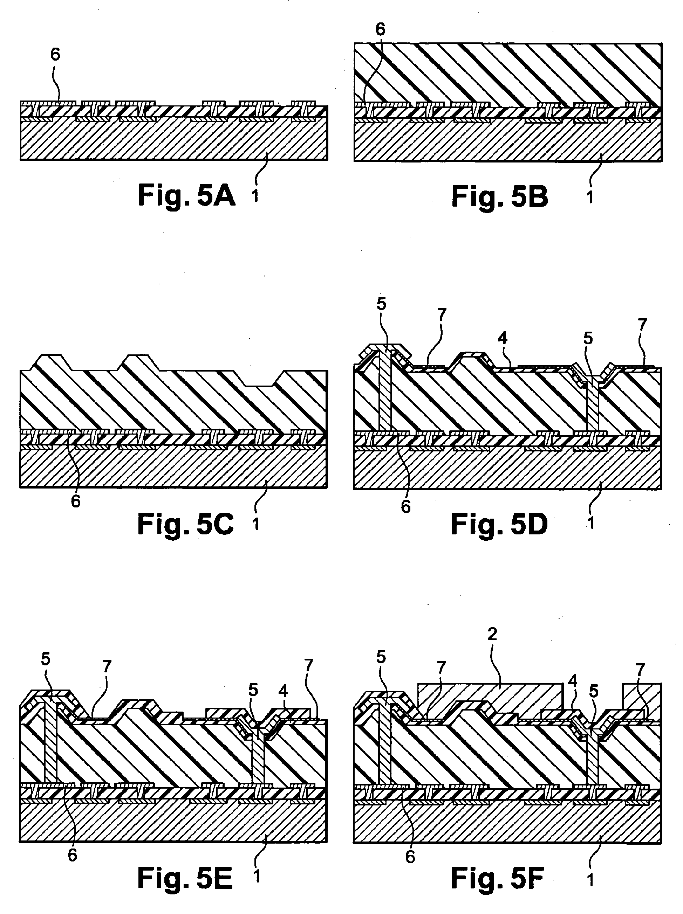

On a représenté en relation avec la figure 5, les différentes étapes entrant dans la réalisation de ce mode de structuration des points d'ancrage des bras d'isolation thermique d'un bolomètre de type résistif selon l'invention.

Figure 5A : Circuit de détection bolométrique constitué de bolomètres sensibles élaborés sur un substrat ou un circuit CMOS **1.** Dépôt et gravure de la couche métallique assurant les fonctions de réflecteur **6** et d'éléments de connectique.

Figure 5B : Couchage d'une couche sacrificielle d'environ 2µm d'épaisseur.

Figure 5C : Gravure d'empreinte dans la couche sacrificielle en utilisant les techniques usuelles de photolithographie. Le profil de l'empreinte est fixé par le profil du masque de résine ou par un traitement thermique de la couche sacrificielle après gravure à une température supérieure à la température de ramollissement.

Figure 5D : Dépôt de matériau isolant **4,** puis d'une couche de TiN (50 à 100Å) constituant l'électrode **7.** Les caractéristiques mécaniques de ces couches sont compatibles (de telle façon que les bras d'isolation thermique soient en compression avant libération) avec le principe de l'invention. Gravure de l'ouverture de contact dans la couche sacrificielle. Dépôt et gravure de la métallisation (TiN, WSi, Ti...) assurant la connexion de l'électrode supérieure avec le substrat. La métallisation du clou **5** orientera ainsi le bras d'isolation thermique après libération.

Figure 5E: Eventuellement, dépôt d'une couche isolante et réalisation des ouvertures de contact.

Figure 5F : Dépôt et gravure du matériau thermométrique **2.** Définition des bras d'isolation thermique **4** et réticulation des détecteurs.

Préférentiellement, le dispositif de détection de l'invention comprend une architecture matricielle, afin de réaliser de l'imagerie infrarouge. Un tel dispositif est par exemple intégré dans une caméra infrarouge.

Le détecteur thermique selon l'invention comporte par exemple un des empilements sensibles ci-dessus, conduisant à un composant optimisé en termes de signal sur bruit. L'utilisation de microstructures en couche mince permet de réaliser une isolation thermique efficace de la matrice de détecteurs, par rapport au circuit de lecture.

Par exemple, ces microstructures peuvent être élaborées suivant différents procédés qui conduisent à la fabrication de micro - ponts. La technologie des micro - bolomètres est réalisée sur une couche sacrificielle, par exemple en polyimide, d'épaisseur comprise entre 1 et 5 µm, préférentiellement égale au quart de la longueur d'onde à détecter, de manière à constituer entre les électrodes et le réflecteur (matériau métallique déposé sur le circuit de multiplexage ou sur le substrat) une cavité quart d'onde conduisant au maximum d'absorption.

Les couches minces (0,005 µm à 0,1 µm) des éléments isolants (SiN, SiO, ZnS, ...) sont obtenues à l'aide de techniques de dépôt basse température, habituellement utilisées pour ces matériaux : pulvérisation cathodique, décomposition plasma (PECVD). La gravure de ces matériaux est généralement réalisée par des procédés d'attaque chimique assistés par plasma.

Les matériaux métalliques (Ti, TiN, Pt, ...) constituant les électrodes sont préférentiellement déposés par pulvérisation cathodique. Ces métallisations sont définies par des procédés de gravure chimique ou par plasma. L'épaisseur de ces couches est comprise entre 0,005 µm à 0,1 µm. La résistance par carré de la couche constituant les électrodes est ajustée de façon à favoriser l'absorption de rayonnement infrarouge (IR).

Le matériau thermomètre peut être un semi-conducteur amorphe ou polycristallin (Si, Ge, SiC, a-Si :H, a-SiC :H, a-SiGe :H, ...), de type p ou n, obtenu à l'aide des techniques de dépôt basse température habituellement utilisées pour ces matériaux : pulvérisation cathodique, décomposition thermique (LPCVD) ou plasma (PECVD). Le dopage éventuel de ces couches est réalisé en introduisant un gaz dopant (BF₃, PH₃, ...) dans le réacteur, ou bien par implantation ionique. La gravure de ces matériaux est généralement réalisée par des procédés d'attaque chimique assistée par plasma. Il peut s'agir également d'un matériau métallique ou encore d'un oxyde de vanadium ou de magnétite.

La nature de la couche sacrificielle détermine le procédé de libération. Il s'agit préférentiellement d'un procédé de gravure par plasma.

La solution préconisée par l'invention présente un avantage évident et décisif en termes de prévention des fuites thermiques par rapport aux détecteurs de l'art antérieur. Ce faisant, les performances du dispositif de détection mettant en oeuvre de tels détecteurs sont singulièrement améliorées.

## Revendications

1. Détecteur thermique d'un rayonnement électromagnétique, comprenant :
• un substrat (1) assurant la fonction de support ;
• un matériau sensible (2), dont une propriété électrique varie avec la température, s'étendant sensiblement parallèlement au substrat (1), formant planche de détection ;
• des éléments conducteurs de l'électricité assurant la transmission électrique entre le matériau sensible (2) et le substrat (1) ;
• des éléments d'isolation thermique (4) reliés d'une part au substrat (1), via des moyens de fixation (5) perpendiculaire au plan du substrat (1), et d'autre part à la planche de détection (2) ;
***caractérisé* en ce que** les moyens de fixation (5) sont constitués de clous métalliques dont l'orientation de la tête impose l'orientation des éléments d'isolation thermique (4) hors de tout plan s'étendant sensiblement parallèlement à celui dans lequel s'inscrit le substrat (1) et/ou la planche de détection (2), les points de liaison desdits éléments d'isolation thermique (4) à la planche de détection (2) étant sensiblement au même niveau.

2. Détecteur thermique d'un rayonnement électromagnétique selon la revendication 1, ***caractérisé* en ce que** le matériau sensible (2) présente une résistivité qui varie avec la température, le détecteur thermique étant constitué par un bolomètre.

3. Détecteur thermique d'un rayonnement électromagnétique selon la revendication 2, ***caractérisé* en ce que** le matériau sensible (2) est constitué d'un matériau semi-conducteur choisi dans le groupe comprenant le silicium polycristallin ou amorphe de type p ou n, le germanium polycristallin ou amorphe de type p ou n, et leurs alliages, les oxydes de vanadium et les ferrites.

4. Détecteur thermique d'un rayonnement électromagnétique selon l'une des revendications précédentes, ***caractérisé* en ce que** tout ou partie des éléments d'isolation thermique (4) sont conducteurs de l'électricité.

5. Détecteur thermique d'un rayonnement électromagnétique selon l'une des revendications précédentes, ***caractérisé* en ce que** la planche de détection (2) présente des éléments de liaison avec les éléments d'isolation thermique (4), lesdits éléments de liaison étant aptes à orienter les éléments d'isolation thermique hors du plan dans lequel s'inscrit la planche de détection.

6. Détecteur thermique d'un rayonnement électromagnétique selon l'une des revendications précédentes, ***caractérisé* en ce que** les éléments d'isolation thermique (4) se présentent sous la forme de X, dont deux des extrémités sont reliées au substrat (1) via les moyens de fixation (5), et dont les deux autres extrémités sont fixées directement sur la planche de détection (2), l'orientation desdits éléments hors d'un plan sensiblement parallèle à celui dans lequel s'inscrit le substrat (1) et/ou la planche de détection (2) résultant de contraintes s'exerçant au niveau des moyens de fixation (5) et/ou de l'interface avec la planche de détection (2) et/ou de la partie centrale des éléments d'isolation thermique (4).

7. Dispositif de détection d'un rayonnement infrarouge de type bolométrique, ***caractérisé* en ce qu'**il met en oeuvre au moins un détecteur thermique selon l'une des revendications 1 à 6.

8. Dispositif de détection d'un rayonnement infrarouge selon la revendication 7, ***caractérisé* en ce qu'**il présente une structure matricielle comportant au moins deux détecteurs thermiques.

## Claims

1. Thermal electromagnetic radiation detector, comprising:
• a substrate (1) providing the carrier function;
• a sensitive material (2), which has an electrical property that varies with the temperature, extending substantially parallel to the substrate (1), forming a detection panel;
• electrical conductor components providing the electrical transmission between the sensitive material (2) and the substrate (1);
• thermal insulating components (4) connected on the one hand to the substrate (1), via fixing means (5) perpendicular to the plane of the substrate (1), and on the other hand to the detection panel (2);
**characterized in that** the fixing means (5) are constituted by metal nails with the direction of the head thereof determining the direction of the thermal insulating components (4) away from any plane extending substantially parallel to that in which the substrate (1) and/or the detection panel (2) is formed, the points of connection of said thermal insulating components (4) to the detection panel (2) being substantially at the same level.

2. Thermal electromagnetic radiation detector as claimed in claim 1, **characterized in that** the sensitive material (2) has a resistivity that varies with the temperature, the thermal detector being constituted by a bolometer.

3. Thermal electromagnetic radiation detector as claimed in claim 2, **characterized in that** the sensitive material (2) is constituted by a semi-conductor material selected from the group that includes p- or n-type polycrystalline or amorphous silicon, p- or n-type polycrystalline or amorphous germanium, and alloys thereof, vanadium oxides and ferrites.

4. Thermal electromagnetic radiation detector as claimed in one of the previous claims, **characterized in that** all or part of the thermal insulating components (4) are electrical conductors.

5. Thermal electromagnetic radiation detector as claimed in one of the previous claims, **characterized in that** the detection panel (2) has components for connecting with the thermal insulating components (4), said connection elements being capable of directing the thermal insulating components away from the plane in which the detection panel is formed.

6. Thermal electromagnetic radiation detector as claimed in one of the previous claims, **characterized in that** the thermal insulating components (4) come in an X-shape, with two of the ends thereof being connected to the substrate (1) via the fixing means (5), and the other two ends thereof being fixed directly to the detection panel (2), the direction of said components away from a plane substantially parallel to that in which the substrate (1) and/or the detection panel (2) is formed resulting from stresses being applied on the fixing means (5) and/or at the interface with the detection panel (2) and/or in the central part of the thermal insulating components (4).

7. Infrared radiation detection device of the bolometric type, **characterized in that** it implements at least one thermal detector as claimed in one of claims 1 to 6.

8. Infrared radiation detection device as claimed in claim 7, **characterized in that** it has a matrix structure comprising at least two thermal detectors.

## Patentansprüche

1. Wärmedetektor für elektromagnetische Strahlung, Folgendes aufweisend:
• ein Substrat (1), das die Trägerfunktion sicherstellt;
• ein sensitives Material (2), von dem sich eine elektrische Eigenschaft mit der Temperatur verändert, und das sich im Wesentlichen parallel zum Substrat (1) erstreckt, wodurch eine Erfassungsplatte gebildet ist;
• elektrisch leitende Elemente, die die elektrische Übertragung zwischen dem sensitiven Material (2) und dem Substrat (1) sicherstellen;
• Wärmeisolationselemente (4), die einerseits über zur Ebene des Substrats (1) senkrechte Befestigungsmittel (5) mit dem Substrat (1) und andererseits mit der Erfassungsplatte (2) verbunden sind;
**dadurch gekennzeichnet, dass** die Befestigungsmittel (5) aus Metallstiften bestehen, deren Kopfausrichtung die Ausrichtung der Wärmeisolationselemente (4) aus jeder Ebene heraus festlegen, die sich im Wesentlichen parallel zu derjenigen erstrecken, in die sich das Substrat (1) und/oder die Erfassungsplatte (2) einfügt/einfügen, wobei sich die Verbindungspunkte der Wärmeisolationselemente (4) zur Erfassungsplatte (2) im Wesentlichen auf derselben Höhe befinden.

2. Wärmedetektor für elektromagnetische Strahlung nach Anspruch 1, **dadurch gekennzeichnet, dass** das sensitive Material (2) einen spezifischen Widerstand aufweist, der sich mit der Temperatur verändert, wobei der Wärmedetektor durch ein Bolometer gebildet ist.

3. Wärmedetektor für elektromagnetische Strahlung nach Anspruch 2, **dadurch gekennzeichnet, dass** das sensitive Material (2) aus einem Halbleitermaterial besteht, das aus der Gruppe ausgewählt ist, die polykristallines oder amorphes Silizium des Typs p oder n, polykristallines oder amorphes Germanium des Typs p oder n, und deren Legierungen, Vanadiumoxide und Ferrite umfasst.

4. Wärmedetektor für elektromagnetische Strahlung nach einem der vorhergehenden Ansprüche, **dadurch gekennzeichnet, dass** es sich bei allen oder einem Teil der Wärmeisolationselemente/n (4) um elektrische Leiter handelt.

5. Wärmedetektor für elektromagnetische Strahlung nach einem der vorhergehenden Ansprüche, **dadurch gekennzeichnet, dass** die Erfassungsplatte (2) Elemente zur Verbindung mit den Wärmeisolationselementen (4) aufweist, wobei die Verbindungselemente in der Lage sind, die Wärmeisolationselemente aus der Ebene heraus auszurichten, in die sich die Erfassungsplatte einfügt.

6. Wärmedetektor für elektromagnetische Strahlung nach einem der vorhergehenden Ansprüche, **dadurch gekennzeichnet, dass** sich die Wärmeisolationselemente (4) in der Form eines X darstellen, von dem zwei Enden über die Befestigungsmittel (5) mit dem Substrat (1) verbunden sind, und von dem die beiden anderen Enden direkt an der Erfassungsplatte (2) befestigt sind, wobei sich die Ausrichtung der Elemente aus einer Ebene heraus, die im Wesentlichen parallel zu derjenigen ist, in die sich das Substrat (1) und/oder die Erfassungsplatte (2) einfügt/einfügen, aus Beanspruchungen ergibt, die im Bereich der Befestigungsmittel (5) und/oder der Grenzfläche zur Erfassungsplatte (2) und/oder dem mittleren Teil der Wärmeisolationselemente (4) wirken.

7. Detektionsvorrichtung der bolometrischen Bauart, für Infrarotstrahlung, **dadurch gekennzeichnet, dass** sie mindestens einen Wärmedetektor nach einem der Ansprüche 1 bis 6 einsetzt.

8. Detektionsvorrichtung der bolometrischen Bauart, für Infrarotstrahlung, **dadurch gekennzeichnet, dass** sie eine Matrixstruktur aufweist, die mindestens zwei Wärmedetektoren umfasst.
